Europäisches Patentamt

European Patent Office

Office européen des brevets

(11) Publication number: **0 052 686**

**B1**

(12) # EUROPEAN PATENT SPECIFICATION

(45) Date of publication of patent specification: **02.05.84**

(51) Int. Cl.³: **C 09 D 1/00, C 09 D 5/00**

(21) Application number: **80304250.6**

(22) Date of filing: **26.11.80**

(54) Insulative coating compositions and coated articles.

(43) Date of publication of application:
**02.06.82 Bulletin 82/22**

(45) Publication of the grant of the patent:
**02.05.84 Bulletin 84/18**

(84) Designated Contracting States:
**AT BE CH DE FR GB IT LI LU NL**

(56) References cited:
**GB - A - 1 210 757**
**US - A - 4 171 227**

(73) Proprietor: **Henning, William J.**
**220 Forest Avenue**
**Cincinnati Ohio 45215 (US)**

(72) Inventor: **Henning, William J.**
**220 Forest Avenue**
**Cincinnati Ohio 45215 (US)**

(74) Representative: **Allen, Oliver John Richard et al,**
**Lloyd Wise, Tregear & Co. Norman House 105-109 Strand**
**London, WC2R 0AE (GB)**

Courier Press, Leamington Spa, England.

# 0 052 686

## Insulative coating compositions and coated articles

This invention relates to coating compositions.

The art of coating compositions has been very well developed. Considerable effort has been devoted to the development of protective and decorative layers which may be formed on numerous substrates of metal, wood and other structural materials. In recent times, more emphasis has been placed upon the insulate capability of various structural materials and, in view of the current energy requirements and natural resources, there is a significant need for highly efficient insulative materials and structures.

An insulative coating composition in accordance with this invention comprises essentially, kaolin particles, staple fibres and a dispersing agent in an aqueous medium. It has been found that such a composition is a highly efficient insulative coating which may be formulated in a liquid state having a viscosity which makes it easily employed as a paint composition or a multi-purpose coating. This composition has been found to provide substantial resistance to transfer of heat or radiant energy. The composition can be very economically formulated to provide an energy saving coating. In this connection, it has been discovered that articles such as walls, window frames, light fixtures, and the like can be provided with a coating which will enable insulative properties to be enhanced on significant orders of magnitude even with relatively thin coating layers.

In a preferred form, the insulative coating composition consists essentially of an aqueous medium containing film-forming solids consisting essentially of a substantial amount of kaolin, a minor amount of cellulose fibers and a minor amount of a dispersing agent. In this composition, it has been found that the kaolin may be film-formed onto a surface and provide significant insulating capability. The effects are considered to be surprising and heretofore unappreciated. Also, the coating may be subjected to environmental, as well as extreme ambient stress conditions, and the coating will not crack, peel or powder. In this composition, the cellulose fibers may be very economically provided by waste paper or newsprint which has been shredded and blended with the kaolin and dispersing aids.

In another preferred form, the insulative coating composition is formulated with kaolin in a substantial amount to provide insulating capability, cellulosic fibers in a binding amount, dispersing aids and a thickening or thixotropic agent in a minor amount. This formulation permits the employment of amounts of insulative kaolin clay, adequately dispersed and stabilized in a liquid base to be suitably employed as a paint or coating composition. Compositions containing these essential ingredients have been employed to coat various surfaces and such coatings formed thereby have been found to be adequately bonded to the substrate and capable of withstanding environmental stress without peeling or otherwise degrading.

In an alternative form of this invention, particularly to enhance the bonding strength of the coating composition to a surface, polymer or latex binders may also be employed. For instance, in a decorative paint or covering, such latex binders will enhance the finish and coating endurance, Furthermore, auxiliary additives including antifoaming agents, wetting agents, pigments, coalescing agents for the latex polymer particles, opacifying agents, extenders, bactericides, fungicides, and the like may be employed in the composition to obtain their needed effects, when desired. The inclusion of such compositions depends upon the end use, for instance, whether it is to be employed as a wall paint or in other environments where a decorative effect is not essential.

In formulating the preferred compositions of this invention, the kaolin component in amounts of 30 to 90% by weight is the critically essential component to provide the insulative capability necessary to obtain the benefits of the invention. The amount of kaolin employed will vary, but a substantial amount must be employed in the aqueous media in order to provide a coating which may be film-formed and insulating. Whereas kaolin has been employed in prior coating compositions, it is not known by applicant to have been employed in substantially large amounts such that the coating which is film-formed consists essentially of insulative kaolin. Therefore, amounts of kaolin on the order of about 30 to about 90% by weight are employed in aqueous media to achieve the desired results. Another essential component is the fibrous binder. It has been found that cellulose fibers, made from shredded newspaper which has been blended in the aqueous media, such that the fibers become dispersed therein, are suitable. In general, staple fibers, i.e., on an order or magnitude of about $\frac{1}{4}$ inch to about 2 inches (0.6 to 5 cm), enable the coating composition to be applied satisfactorily to a surface. The fibers permit the aqueous kaolin coating composition to be film-formed on a surface and bound thereon without cracking. In other words, the fibers serve as an essential binding function on the kaolin solids which are film-formed on a surface. The cellulose fibers also provide a supplemental insulating capability, depending upon the quantity employed in the composition. Generally reinforcing staple fibers are included on an order of about 1 to about 5 percent by weight. It should be understood that the so called "staple" fibers vary in length, but are normally short fibers and these are preferred. Whereas, it is also preferable to employ cellulosic fibers because they are relatively inexpensive, and such fibers have been found to coact with the kaolin clay to provide the desired results, it should be understood that other fibers of a similar nature including cotton, wool, wood, glass, polyester, or the like may be employed to provide the desired results according to the principles of this invention. However, for economies and energy savings, waste paper fibers are preferred.

2

**0 052 686**

Dispersants are employed in the aqueous coating compositions to adequately suspend and stabilize the kaolin particles in the aqueous media along with the binding cellulosic fibers and other additives. Such dispersing agents or surfactants are well known and developed in the coating art. Typically, the surfactants are of an anionic type. Inorganic anionic surfactants or dispersing aids include tetra potassium pyro phosphate, other alkali metal phosphorous salts, or other alkali or alkaline earth metal salts. Other anionic surfactants include alkali and alkaline earth metal salts of neutralized phosphoric acid esters of oxyalkylated higher alkyl phenols or aliphatic monohydric alcohols. Other anionic surfactants of saponified fatty acids or soaps are well known in the coatings art and reference may be made to the above patents for further details of such dispersing aids or surfactants. In general, a surfactant or dispersing aid is employed in a minor amount, i.e., on an order of about 0.01 to about 1.5% by weight. In addition to the anionic dispersing aids or surfactants, nonionic agents may also be employed. Typically, the nonionic surfactants have hydrophilic portions or side chains usually of the polyoxyalkylene txpe. The oil soluble or dispersible part of the molecule is derived from either fatty acids, alcohols, amides or amines. By suitable choice of starting materials and regulation of the length of the polyoxyalkylene chain, the surfactant parts of the nonionic detergents may be varied as is well known. Suitable examples of nonionic surfactants include alkyl phenoxy polyoxy ethylene glycol, for example, ethylene oxide adduct of either octyl-, nonyl- or tridecyl phenol and the like. These mentioned nonionic surfactants are usually prepared by reaction of the alkyl phenol with ethylene oxide. Other anionic or nonionic dispersants or surfactants which may be employed and are well known in the coating formulation art are disclosed, for example, in "Surface Active Agents and Detergents" by Schwartz et al (1958, Interscience Publishers, New York).

When the kaolin is employed in a substantial amount in the aqueous media, for example 70 percent by weight, it tends to have its own thixotropic properties. Accordingly, the coating composition may be so formulated at such high solids concentrations of kaolin and the viscosity is such that it may be readily applied as a paint or coating. However, at lower concentrations of kaolin, for example about 30—40%, it may be necessary to employ a thickening agent. Thickening or thixotropic agents such as hydroxy ethyl cellulose, methyl cellulose, carboxy methyl cellulose therefore may be employed in a very minor amount on the order of about 0.01 to about 1.5% by weight. Other thickeners which may be used are polyvinyl alcohol, gum arabic, gum tragacanth, ammonium polyacrylate, sodium polyacrylate, ammonium alginate, sodium alginate, and the like.

As also mentioned, when desired, a polymer or latex binder may be employed to serve as a supplemental binder and aid in the adherence of the coating composition to a surface. Conventional latex polymers are usually thermoplastic. The polymer particles are made sufficiently soft or additives are included in the formulation to permit coalesence of the particles as a film after it is formed. Polymers and copolymers of acrylic acid, methacrylic acid, esters of these acids, etc., generally called an "acrylic resin" are usually employed. Vinylacetate and ethylene copolymers are also employed in such latices. Among other water dispersible binders are polyvinyl alcohol, hydrolyzed polyvinyl acetate, hydrolyzed copolymers of vinyl esters or organic acids with other polymerizible comonomers, for example, copolymer or vinyl acetate and ethyl acrylate, and the like. Other polymer based latices may be employed with reference to the above mentioned patents. When employed, depending upon the desired effect, such latices are used in amounts of from about 5 to about 20 percent by weight. In compositions of this invention, an acrylic resin, a polyvinyl acetate or copolymers thereof are preferred.

Other ingredients, such as fungicides may also be included. Among the suitable pigments which may be used in accordance with this invention are the finely divided rutile titanium dioxides. Pigments other than rutile titanium dioxide can, however, also be used. The pigment particles should not have a diameter in excess of about 50 $\mu$m but particle sizes even as little as 0.1 are suitable. The particle sizes of the kaolin follow the same general rule.

The principles of this invention will be further understood with reference to the following examples.

3

## Example I
An insulative coating composition was prepared by blending the following ingredients:

| Percent | |
|---|---|
| 42.64 | Water |
| .14 | Tetra Potassium Pyro Phosphate (Surfactant or Dispersing Aid) |
| .43 | Anti-foam |
| .43 | Wetting Agent (Pigment Wetting Aid) |
| .36 | Lechithin (Pigment Dispersing Aid) |
| 2.13 | Ethylene Glycol (Moisture Release Retardant) |
| 1.42 | Butyl Ether of Diethylene Glycol Acetate (Coalescing Agent for Polymer Particles) |
| .43 | Diethylene Glycol Ethyl Ether (Coalescing Agent for Polymer Particles) |
| .07 | Bactericide-Fungicide |
| 3.13 | Titanium Dioxide (Pigment) |
| 4.26 | Calcined Clay (Opacifying Agent) |
| 3.55 | Calcium Carbonate (Extender) |
| 30.70 | Kaolin (Particle Size Approximately 0.2 to 0.3 $\mu$m) |
| .07 | Hydroxy Ethyl Cellulose (Thickening Agent) |
| 9.24 | Vinyl Acetate Acrylic Copolymer Latex |
| 1.00 | Cellulosic Fiber |

The above composition was formulated for painting interior surfaces. The kaolin component was contained in a high percentage on a dry weight basis and the cellulosic fibers were provided by shredded newsprint which was dispersed throughout the aqueous media during high speed blending. In this formulation a vinyl acetate acrylic copolymer latex is used to provide additional binding strength of the coating on the wall surface. The other ingredients and their function are identified in the above listing of the components.

The composition of Example I was coated onto the interiors of aluminium window frames. The coating composition was applied with a brush on an unpainted aluminium interior window frame in a thickness of approximately 4—6 mils (1 to $2 \times 10^{-2}$ cm). With an outside air temperature of about 40°F (4.4°C) and an indoor temperature of about 65°F (18.4°C), the window frames coated with the insulative composition exhibited a temperature of about 55°F (12.8°C). The temperature results were obtained using a Raytex Infrared Scanner No. R38ORVF, having an accuracy of plus or minus 2°F (1.1°C). The uncoated window frames in the same room exhibited a temperature reading of 62°F (16.7°C). The temperature reading on the outside frame that was coated on the interior frame with the insulative coating composition was about 53°F (11.7°C). The temperature on the outside frame that was not coated on the interior frame was about 60°F (15.6°C). Accordingly, the insulative coating composition of this invention when applied to such an aluminium substrate provided about a 10 to 12% reduction in heat loss.

In order to further demonstrate the insulative characteristics of a coating composition formed in accordance with the principles of this invention, a 9 inch (23 cm) length of $\frac{5}{8}$ inch (1.6 cm) OD copper tubing was coated with approximately a $\frac{3}{8}$ inch (0.95 cm) thickness of the insulative coating composition of Example I from one end of the tubing for 5 inches (12.7 cm). The insulative coating was applied with a brush in successive layers allowing each layer to dry in order to achieve a $\frac{3}{8}$ inch (0.95 cm) thickness. A butane torch with a $\frac{1}{2}$ inch (1.27cm) diameter flame tip, approximating 1000°F (540°C) or more, was used having a blue flame length of approximately $\frac{1}{2}$ inch (1.27 cm). The uncoated portion of the copper tube was held about $\frac{1}{2}$ inch (1.27 cm) above the flame. The flame was directed $\frac{1}{2}$ inch (1.27cm) from the end of the tube. The hand-held tube was held $\frac{1}{2}$ inch (1.27 cm) from the end of the coated portion of the tube for about 5 minutes. At this point, the flame was terminated and the coated portion of the tube $\frac{1}{2}$ inch (1.27 cm) from the end was determined to be about 125°F (46.1°C) using the infrared scanner mentioned above. This demonstrates the highly insulative character of the coating composition of this invention.

The coating composition formulated in accordance with Example I was also applied to walls, ceilings and floors with suitable applicators in thicknesses approximating about 10—12 mils (2.5 to $3 \times 10^{-2}$ cm). After a passage of about 6 months, the coating did not chip, peel or powder. Furthermore, such coatings applied to heating ovens have exhibited considerable natural gas savings. For instance, the interior of a large industrial bake oven was coated on its walls, ceiling and floor with the composition of Example I having a thickness aproximating 10—12 mils (2.5 to $3 \times 10^{-2}$ cm). This coating after six months has not chipped, peeled or powdered.

Prior to coating the industrial bake oven, a start-up of the oven up to the oven temperature of 300°F (149°C) required about 55 minutes. After coating, only 30 minutes were required to come up to

4

300°F (149°C). Additionally, the following temperature readings were taken at four different locations on the exterior of the insulated oven booth, both before and after the coating was applied.

| | Before | | After | |
|---|---|---|---|---|
| | °F | °C | °F | °C |
| Control Area | 100° | 38° | 95° | 35° |
| Porthole Area | 140° | 60° | 130° | 54° |
| Main Access | 110° | 43° | 104° | 40° |
| Rear Access Door | 105° | 40.5° | 100° | 38° |

The above temperature readings demonstrate that a significant reduction in heat loss employing the insulative coating composition of this invention.

Example II

The following ingredients were formulated from a slurry by high speed blending.

| Percent | Ingredient |
|---|---|
| 16.16 | Water |
| .85 | Tetra Potassium Pyro Phosphate |
| .51 | Anti-foam |
| 2.55 | Ethylene Glycol |
| 1.70 | Butyl Ether of Diethylene Glycol Acetate |
| .51 | Diethylene Glycol Ethyl Ether |
| .08 | Bactericide-Fungicide |
| 3.74 | Titanium Dioxide |
| 61.58 | 70% Kaolin Slurry |
| .08 | Hydroxy Ethyl Cellulose |
| 11.05 | Vinyl Acetate Acrylic Copolymer Latex |
| 1.19 | Cellulosic Fiber |

The functions of the respective ingredients listed were essentially the same as the functions of the same ingredients of Example I. The composition of Example II was used to coat a reflective shield on a recessed ceiling light using a 200 watt bulb to produce radiant heat. The ceiling light was located approximately 5 feet (1.5 m) above a Formica top table having a medium brown colour in a room heated at about 63°F (17.3°C). Prior to coating the reflective shield with the above composition, the light was turned on for about 1 hour. There was no temperature change observed upon taking readings of the table surface upon employing the infrared scanner described in Example I. However, after coating the reflective shield of the lighting fixture using the coating composition of this Example II, the temperature reading on the table was about 67°F (19.5°C) after one hour with the light. The room temperature remained at 63°F (17.3°C). The reflective shield was silver before coating and an off-white after coating. This Example demonstrates that heat energy was significantly reflected off of the light shield. The composition of Example II has also been applied to various surfaces in a manner similar to the composition of Example I with substantially similar results.

In addition, the composition of Example I has been employed on the intake manifold of an internal combustion engine of a car. Present data indicates that a significant increase in power performance is immediately observable. Mileage checks also demonstrate that approximately 20% fuel savings have been observed. This indeed demonstrates the advantageous energy saving and antipollution character of the coating compositions of this invention.

Example III
The following ingredients were formulated in a manner similar to the above examples.

| Percent | Ingredient |
| --- | --- |
| 16.16 | Water |
| .85 | Tetra Potassium Pyro Phosphate |
| .51 | Anti-foam |
| .08 | Bactericide-Fungicide |
| 61.58 | 70% Kaolin Slurry |
| .08 | Hydoxy Ethyl Cellulose |
| 1.19 | Cellulose Fiber |

The above formulation was essentially the same as Example II, except that the latex binder, coalescing agents and pigment were eliminated. When the formulation was employed to coat various surfaces in a manner substantially similar to the coating of articles according to Examples I and II, substantially similar results of insulative and reflective capabilities were achieved.

## Claims

1. An insulative aqueous coating composition containing film-forming solids characterised in that the film-forming solids are essentially comprised of kaolin particles, staple fibres and a dispersing agent for the solids in the aqueous composition.

2. A composition as claimed in Claim 1 including a thickening agent.

3. A composition as claimed in Claim 2 in which the agent is a cellulosic thickener.

4. A composition as claimed in Claim 3 in which the cellulosic thickener is methyl cellulose, hydroxyethyl cellulose or carboxyethyl cellulose.

5. A composition as claimed in any of the preceding claims including a minor amount of a latex binder.

6. A composition as claimed in Claim 5 in which the latex binder is an acrylic resin, vinyl acetate polymer or a copolymer thereof.

7. A composition as claimed in any of the preceding claims wherein the fibres are cellulose fibres.

8. A composition as claimed in Claim 7 wherein the cellulosic fibres are derived from waste paper.

9. A composition as claimed in any of the preceding claims comprising kaolin in an amount from 30 to 90% by weight, waste paper fibres in an amount from 1 to 5% by weight and a minor amount of a dispersing agent for the solids in the aqueous composition.

10. A composition as claimed in any of the preceding claims wherein the dispersing agent is a nonionic or an anionic surfactant.

11. A composition as claimed in Claim 10 wherein the dispersing agent is present in an amount of from 0.01 to 1.5% by weight.

12. A composition as claimed in any of the preceding claims including a cellulosic thickener in an amount of from 0.01 to 1.5% by weight.

13. A composition as claimed in any of the preceding claims including a latex binder in an amount of from 5 to 20% by weight.

14. A structural wall surface coated with the film-forming solids derived from a coating composition as claimed in any of the preceding claims.

15. An intake manifold of an internal combustion engine coated with film-forming solids derived from a coating composition as claimed in any preceding claim.

16. A reflective light surface coated with film-forming solids derived from a coating composition as claimed in any of the preceding claims.

## Revendications

1. Composition de revêtement aqueuse isolante contenant des solides filmogènes, caractérisée en ce que les solides filmogènes sont constitués essentiellement par des particules de kaolin, des fibres coupées et un agent dispersant pour les solides de la composition aqueuse.

2. Composition suivant la revendication 1, comprenant un agent épaississant.

3. Composition suivant la revendication 2, dans laquelle l'agent est un épaississant cellulosique.

4. Composition suivant la revendication 3, dans laquelle l'épaississant cellulosique est la méthylcellulose, l'hydroxyéthylcellulose ou la carboxyméthylcellulose.

5. Composition suivant l'une quelconque des revendications précédentes, comprenant une quantité mineure d'un liant à l'état de latex.

6. Composition suivant la revendication 5, dans laquelle le liant à l'état de latex est une résine acrylique, un polymère d'acétate de vinyle ou un copolymère correspondant.

7. Composition suivant l'une quelconque des revendications précédentes, dans laquelle les fibres sont des fibres cellulosiques.

8. Composition suivant la revendication 7, dans laquelle les fibres cellulosiques porviennent de papier de rebut.

9. Composition suivant l'une quelconque des revendications précédentes, comprenant du kaolin en une quantité de 30 à 90% en poids, des fibres de papier de rebut en une quantité de 1 à 5% en poids et une quantité mineure d'un agent dispersant pour les solides de la composition aqueuse.

10. Composition suivant l'une quelconque des revendications précédentes, dans laquelle l'agent dispersant est un surfactif non ionique ou un surfactif anionique.

11. Composition suivant la revendication 10, dans laquelle l'agent dispersant est présent en une quantité de 0,01 à 1,5% en poids.

12. Composition suivant l'une quelconque des revendications précédentes, comprenant un épaississant cellulosique en une quantité de 0,01 à 1,5% en poids.

13. Composition suivant l'une quelconque des revendications précédentes, comprenant un liant à l'état de latex en une quantité de 5 à 20% en poids.

14. Surface d'une paroi de structure revêtue des solides filmogènes provenant d'une composition de revêtement suivant l'une quelconque des revendications précédentes.

15. Collecteur d'admission d'un moteur à combustion interne revêtu de solides filmogènes provenant d'une composition de revêtement suivant l'une quelonque des revendications précédentes.

16. Surface réfléchissant la lumière revêtue de solides filmogènes provenant d'une composition de revêtement suivant l'une quelconque des revendications précédentes.

**Patentansprüche**

1. Isolierende wässrige, filmbildende Feststoffe enthaltende Beschichtungszusammensetzung, dadurch gekennzeichnet, dass die filmbildenden Feststoffe im wesentlichen aus Kaolinteilchen, Stapelfasern und einem Dispergierungsmittel für die Feststoffe in der wässrigen Zusammensetzung bestehen.

2. Zusammensetzung nach Anspruch 1, einschliesslich eines Verdickungsmittels.

3. Zusammensetzung nach Anspruch 2, worin das Mittel ein Celluloseverdickungsmittel ist.

4. Zusammensetzung nach Anspruch 3, worin das Celluloseverdickungsmittel Methylcellulose, Hydroxyäthylcellulose oder Carboxymethylcellulose ist.

5. Zusammensetzung nach einem der vorhergehenden Ansprüche, einschliesslich einer geringen Menge eines Latexbindemittels.

6. Zusammensetzung nach Anspruch 5, worin das Latexbindemitel ein Acrylharz, ein Vinylacetatpolymer oder ein Copolymer von diesen ist.

7. Zusammensetzung nach einem der vorhergehenden Ansprüche, worin die Fasern Cellulosefasern sind.

8. Zusammensetzung nach Anspruch 7, worin die Cellulosefasern aus Altpapier stammen.

9. Zusammen nach einem der vorhergehenden Ansprüche, bestehend aus Kaolin in einer Menge von 30 bis 90 Gew.-%, Altpapierfasern in einer Menge von 1 bis 5 Gew.-% und einer geringen Menge eines Dispergierungsmittels für die Feststoffe in der wässrigen Zusammensetzung.

10. Zusammensetzung nach einem der vorhergehenden Ansprüche, worin das Dispergierungsmittel ein nicht-ionogenes oder anionen-aktives Tensid ist.

11. Zusammensetzung nach Anspruch 10, worin das Dispergierungsmittel in einer Menge von 0,01 bis 1,5 Gew.-% vorliegt.

12. Zusammensetzung nach einem der vorhergehenden Ansprüche, einschliesslich eines Celluloseverdickungsmittels in einer Menge von 0,01 bis 1,5 Gew.-%.

13. Zusammensetzung nach einem der vorhergehenden Ansprüche, einschliesslich eines Latexbindemittels in einer Menge von 5 bis 20 Gew.-%.

14. Bauwandoberfläche, beschichtet mit filmbildenden Feststoffen, die sich von einer Beschichtungszusammensetzung nach einem der vorhergehenden Ansprüche ableiten.

15. Ansaugkrümmer einer Verbrennungsmaschine, beschichtet mit filmbildenden Feststoffen, die sich von einer Beschichtungszusammensetzung nach einem der vorhergehenden Ansprüche ableiten.

16. Lichtreflektierende Oberfläche, beschichtet mit filmbildenden Feststoffen, die sich von einer Beschichtungszusammensetzung nach einem der vorhergehenden Ansprüche ableiten.